# EUROPEAN PATENT SPECIFICATION

(11) **EP 3 219 552 B1**
(45) Date of publication and mention of the grant of the patent: **09.10.2019**
(21) Application number: 16184573.0
(22) Date of filing: 17.08.2016
(51) Int. Cl.: B60R 13/02, F16B 5/06

(54) **VEHICLE CLIP AND OBJECT CLAMPING APPARATUS HAVING THE SAME**
FAHRZEUGKLAMMER UND OBJEKTKLEMMVORRICHTUNG
PINCE DE VÉHICULE ET APPAREIL DE SERRAGE D'OBJET

(30) Priority: 14.03.2016 IN 201611008867
(43) Date of publication of application: 20.09.2017
(73) Proprietor: Hyundai Motor Company, Seoul 06797 (KR); Kia Motors Corporation, Seoul 06797 (KR); Hyundai Motor India Engineering Private Ltd., 500084 Hyderabad (IN)
(72) Inventor: HWANG, Seung Hai, 18600 Gyeonggi-do (KR); MUNAGA MASTHAN, Vikas, 500084 Hyderabad (IN)
(74) Representative: Isarpatent

(56) References cited:
- EP-A1- 0 499 532
- WO-A1-2012/056646
- WO-A1-2015/122277
- FR-A1- 2 726 868
- GB-A- 2 125 878
- JP-U- S57 109 077
- US-A- 5 653 410
- US-A- 6 086 021
- US-A1- 2004 052 575

## Description

### BACKGROUND OF THE DISCLOSURE

### Technical Field

The present disclosure relates to a vehicle clip and an object clamping apparatus having the same, and more particularly, to a vehicle clip for unifying part numbers of parts derived from clip parts used in vehicles, and an object clamping apparatus having the same.

### Discussion of the Related Art

In general, a variety of electronic parts including sensors, curtain airbags, inside handle brackets, wiring, and cables are installed in vehicles.

When laying out such electronic parts, T-clip members are used to fix the parts and simultaneously secure a space required to install other parts.

For example, a cable as an electronic part is fixedly adhered to the topmost portion of a vehicle body without being hung downward by a T-clip member, thereby helping to easily arrange other electronic parts.

As such, a large number of T-clip members, which are used to fix electronic parts, are required in order to manufacture vehicles. Accordingly, the T-clip members are numbered before being used to manufacture vehicles. However,
the T-clip members must inevitably have dual part numbers since they are inserted in different directions depending on the vehicle model.

For example, in an LHD vehicle, a T-clip member is fastened to a corresponding electronic part in a left direction (in an upward direction), whereas, in an RHD vehicle, a T-clip member is fastened to a corresponding electronic part in a right direction (in a downward direction).

Therefore, the part numbers of T-clip members used must be different depending on the vehicle model. For this reason, when vehicles are produced in mixed lines, the T-clip members may be assembled and mounted to electronic parts in error if the electronic parts are not accurately ordered and not separately marked.

### [Patent Document]

Korean Patent No. 0700045 (March 20, 2007)
Korean Utility Model No. 0388147 (June 17, 2005)

### SUMMARY OF THE DISCLOSURE

Accordingly, the present disclosure is directed to a vehicle clip and an object clamping apparatus having the same that substantially obviates one or more problems due to limitations and disadvantages of the related art.

An object of the present disclosure is to provide a vehicle clip capable of fixing a corresponding electronic part in both upward and downward directions (in both left and right directions) regardless of the vehicle model, and an object clamping apparatus having the same.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

To achieve these objects and other advantages and in accordance with the purpose of the disclosure, as embodied and broadly described herein, a vehicle clip includes a stud unit including panel fixing bodies formed on front and rear surfaces thereof so as to be fixed to panels, and hooks formed on upper and lower surfaces thereof, and a clip body unit having an opening portion for fitting the stud unit including the hooks from either direction.

The stud unit may further include a stud body formed between the panel fixing bodies, and connection bodies formed between the stud body and the panel fixing bodies.

Each of the hooks may have a protruding shape, and the hook may have a square shape.

The clip body unit may have a "T" shape.

In another aspect of the present disclosure, an object clamping apparatus for clamping objects using a vehicle clip includes vehicle panels, a vehicle clip including a stud unit having panel fixing bodies formed on front and rear surfaces thereof so as to be fixed to the panels and hooks formed on upper and lower surfaces thereof, and a clip body unit having an opening portion for fitting the stud unit including the hooks from either direction, and objects fastened and clamped to the clip body unit in upward and downward directions thereof.

The stud unit may further include a stud body formed between the panel fixing bodies, and connection bodies formed between the stud body and the panel fixing bodies.

Each of the hooks may have a protruding shape, and the hook may have a square shape.

The clip body unit may have a "T" shape.

The objects may be electronic parts including a curtain airbag, a handle bracket, and a wiring cable.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is an exploded perspective view illustrating an example of a vehicle clip according to an embodiment;
FIG. 2 is an assembled perspective view of the vehicle clip of FIG. 1;
FIG. 3 is an exploded perspective view illustrating an example of an object clamping apparatus according to another embodiment; and
FIG. 4 is a view illustrating the structure of an existing T-clip which is different from the clip illustrated in FIGS. 1 to 3.

### DETAILED DESCRIPTION OF THE DISCLOSURE

Reference will now be made in detail to various methods and apparatuses according to the preferred embodiments of the present disclosure, examples of which are illustrated in the accompanying drawings.

Terms such as "portion" used in the present disclosure are adopted only for easy writing of the disclosure, and are not intended to have specific meanings or play roles in themselves.

It will be understood that the term "and/or" used in the present disclosure is intended to include one or more of listed items and all possible combinations thereof.

### [Example of Vehicle Clip]

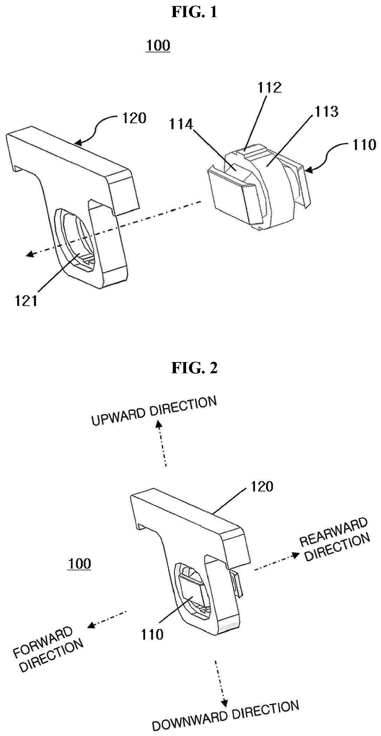

FIG. 1 is an exploded perspective view illustrating an example of a vehicle clip according to an embodiment, and FIG. 2 is an assembled perspective view of the vehicle clip of FIG. 1.

As illustrated in the drawings, the vehicle clip, which is designated by reference numeral 100, according to the embodiment includes a stud unit 100 and a clip body unit 120.

The stud unit 110 includes panel fixing bodies 111 which are formed on the front and rear surfaces thereof so as to be fixed to panels, and hooks 112 formed on the upper and lower surfaces thereof. The panels are merely an example, and the present disclosure is not limited thereto. For example, the panels may be other structures.

In addition, the stud unit 110 includes a stud body 113 formed between the panel fixing bodies 111, and may include connection bodies 114 formed between the stud body 113 and the panel fixing bodies 111.

Here, the panel fixing bodies 111 are substantially coupled to the connection bodies 114 disposed on both surfaces (front and rear surfaces) of the stud body 113. In this case, the panel fixing bodies 111 may be configured as a pair of bodies, since they are formed on both surfaces of the stud body 113.

Thus, wherever the panels are located in the forward and rearward directions of the stud unit 110, any one of the pair of panel fixing bodies 111 may be fixed to the associated panel, regardless of whether the direction is forward or rearward.

On the other hand, the hooks 112 may be configured as a pair of hooks, since they are formed on the upper and lower surfaces of the stud body 113 so as to be substantially coupled thereto.

Each of the hooks 112 has a protruding shape, and preferably a square shape. When the stud unit 110 is fitted to the clip body unit 120 as will be described later, the hooks 112 may help in increasing the strength of attachment between the stud unit 110 and the clip body unit 120.

In the embodiment, the clip body unit 120 may have an opening portion 121 for fitting the stud body 113 of the stud unit 110 including the hooks 112 from either direction.

Here, the opening portion 121 may be formed near the center of the clip body unit 120 and be oriented in the direction in which the stud body 113 of the stud unit 110 is inserted, i.e. in the forward and rearward directions.

The opening portion 121 has a shape corresponding to the shape of the stud body 113 as well as those of the hooks 112, and it is possible to increase the strength of attachment between the stud unit 110 and the clip body unit 120.

Accordingly, by manufacturing the stud unit 110 fixed to the panels regardless of the forward and rearward directions, and the clip body unit 120 to which the stud unit 110 is fixed, the clip body unit 120 may be used to fix corresponding electronic parts as required when vehicles are assembled, regardless of whether the parts, which have different part numbers depending on the vehicle model, are oriented upward or downward.

Here, "fixing the electronic parts" means, for example, that when the electronic parts are wiring cables, the wiring cables are prevented from hanging Furthermore, this means that the electronic parts may be adhered and fastened to vehicles even though they have intrinsic shapes, such as the shapes of a curtain airbag and a handle bracket.

The clip body unit 120 may have a T-clip shape. When the clip body unit 120 is manufactured to have a T-clip shape, the corresponding electronic parts may be fixed (fastened) using the T-clip of the embodiment in both upward and downward directions, unlike the case of fixing the electronic parts in an upward or downward direction using existing T-clips having different part numbers depending on the vehicle model.

Thus, in contrast to the use of existing T-clips having different part numbers, since the vehicle T-clip of the embodiment has a universal part number and may be used regardless of the vehicle model, there is no need to accurately order T-clips when the vehicles are produced in mixed lines.

### [Example of Object Clamping Apparatus]

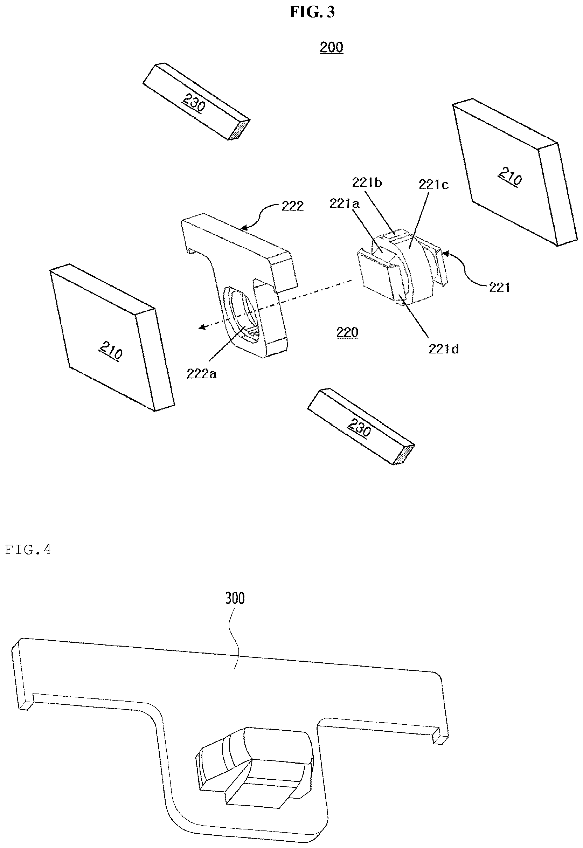

FIG. 3 is an exploded perspective view illustrating an example of an object clamping apparatus according to another embodiment.

Referring to FIG. 3, the object clamping apparatus, which is designated by reference numeral 200, according to the embodiment may include vehicle panels 210, a vehicle clip 220, and objects to be clamped 230, in order to clamp the objects using the vehicle clip.

The vehicle panels 210 are located between electronic parts, or the electronic parts are mounted to the panels. The panels are merely an example, and may include typical panels.

For example, a portion of the vehicle clip 220 is coupled to the panels 210 located in the forward and rearward directions thereof, and the vehicle clip 220 serves to clamp the objects 230 located in the upward and downward directions thereof.

To this end, the vehicle clip 220 includes a stud unit 221 and a clip body unit 222, as in FIGS. 1 and 2.

The stud unit 221 includes panel fixing bodies 221a which are formed on the front and rear surfaces thereof so as to be fixed to the panels 210, and hooks 221b formed on the upper and lower surfaces thereof. The panels are merely an example, and the present disclosure is not limited thereto. For example, the panels may be other structures.

In addition, the stud unit 221 may further include a stud body 221c formed between the panel fixing bodies 221a and connection bodies 221d formed between the stud body 221c and the panel fixing bodies 221a.

Here, the panel fixing bodies 221a are substantially coupled to the connection bodies 221d disposed on both surfaces (front and rear surfaces) of the stud body 221c. In this case, the panel fixing bodies 221a may be configured as a pair of bodies since they are formed on both surfaces of the stud body 221c.

Thus, wherever the panels 210 are located in the forward and rearward directions of the stud unit 221, any one of the pair of panel fixing bodies 221a may be fixed to the associated panel, regardless of whether it is oriented in a forward or rearward direction.

On the other hand, the hooks 221b may be configured as a pair of hooks, since they are formed on the upper and lower surfaces of the stud body 221c so as to be substantially coupled thereto.

Each of the hooks 221b has a protruding shape, and preferably a square shape. When the stud unit 221 is fitted to the clip body unit 222 as will be described later, the hooks 221b may help in increasing the strength of attachment between the stud unit 221 and the clip body unit 222.

In the embodiment, the clip body unit 222 may have an opening portion 222a for fitting the stud body 221c of the stud unit 221 including the hooks 221b from either direction.

Here, the opening portion 222a may be formed near the center of the clip body unit 222 and be oriented in the direction in which the stud body 221c of the stud unit 221 is inserted, i.e. in the forward and rearward directions.

The opening portion 222a has a shape corresponding to the shape of the stud body 221c as well as those of the hooks 221b, and it is possible to increase the strength of attachment between the stud unit 221 and the clip body unit 222.

Accordingly, by manufacturing the stud unit 221 fixed to the panels 210 regardless of the forward and rearward directions, and the clip body unit 222 to which the stud unit 221 is fixed, the clip body unit 222 may be used to fix the corresponding objects 230 as required when vehicles are assembled, regardless of whether the objects, which have different part numbers depending on the vehicle model, are oriented upward or downward.

Here, "fixing the objects 230" means, for example, that when the objects 230 are wiring cables, the wiring cables are prevented from hanging. Furthermore, this means that the objects 230 may be adhered and fastened to vehicles even though they have intrinsic shapes such as the shapes of a curtain airbag and a handle bracket.

The clip body unit 222 may have a T-clip shape. When the clip body unit 222 is manufactured to have a T-clip shape, the corresponding objects 230 may be fixed (fastened) using the T-clip of the embodiment in both upward and downward directions, unlike fixing the electronic parts in an upward or downward direction using existing T-clips having different part numbers depending on the vehicle model.

Thus, unlike the use of existing T-clips having different part numbers, since the vehicle T-clip of the embodiment has a universal part number and may be used regardless of the vehicle model, there is no need to accurately order T-clips when the vehicles are produced in mixed lines.

Finally, the objects 230 are fastened and clamped to the clip body unit 222 in the upward and downward directions thereof. The objects 230 may be electronic parts including a curtain airbag, a handle bracket, and a wiring cable.

Conventionally, when an electronic part is located at an upper side, the upper electronic part is fixed using a T-clip having a specific part number, whereas when an electronic part is located at a lower side, the lower electronic part is fixed using a T-clip having a different part number.

However, the objects 230 may be clamped to the clip body unit 222 of the clip 220 having the same part number in the embodiment. For example, when an object 230 is located at an upper side, the object 230 may be clamped by the clip body unit 222 of the clip 220 having the same part number, and when an object 230 is located at a lower side, the object 230 may be clamped by changing the direction of the clip 220 having the same part number.

Ultimately, the upper and lower objects 230 may be clamped regardless of the directions in which they are fastened in the embodiment. This directionality may be obtained by coupling both surfaces of the stud unit 221 to the panels 210 and by the fastening structure between the stud unit 221 and the clip body unit 222.

Meanwhile, the objects 230 to be clamped to which the above vehicle clip 220 is applied are not limited to the above-mentioned electronic parts, and the objects 230 may be all electronic parts installed in the vehicle.

In addition, the above-mentioned stud unit 110 and clip body unit 120 may be manufactured integrally.

### [Example of Existing T-clip]

FIG. 4 is a view illustrating the structure of an existing T-clip. The existing T-clip 400 illustrated in FIG. 4 does not have directionality for fastening of the electronic parts in the upward and downward directions illustrated in FIGS. 1 to 3, and may fasten a corresponding electronic part only in one direction.

If the electronic part is intended to be fastened in a different direction, the existing T-clip may be applied to fastening the electronic part by turning the T-clip over in the associated direction. In such an existing T-clip structure, T-clips having different part numbers may have no choice but to be applied according to directionality for fastening of the parts.

However, each of the clips according to the embodiments illustrated in FIGS. 1 to 3 may have the same part number and improve fastening of parts due to a fastening structure having directionality of one direction and opposite direction, compared to existing T-clips.

As apparent from the above description, since the part numbers of clips are unified and may be used regardless of the vehicle model when vehicles are manufactured in the embodiment, it is possible to prevent the clips from being assembled and mounted to corresponding parts in error.

In addition, since a stud is applied to an existing T-clip in the embodiment, it is possible to clamp an object in either upward or downward direction even when the existing T-clip is used. Thus, parts, which are asymmetrical up and down, can be prevented from having dual part numbers, and can be used in common.

In addition, it is possible to mass produce clips which are movable upward and downward, and thus to reduce the costs thereof.

## Claims

1. A vehicle clip (100) comprising:
a stud unit (110) comprising a stud body (113), a pair of panel fixing bodies (111) disposed on both ends of the stud body (113), and hooks (112) formed on upper and lower surfaces of the panel fixing bodies (111); and
a clip body (120) unit having an opening portion (121),
wherein the clip body unit (120) has a "T" shape,
wherein the opening portion (121) has a shape corresponding to a shape of the stud body (113) and the hooks (112) so that the stud unit (110) is bidirectionally fitted into the clip body unit (120).

2. The vehicle clip according to claim 1, wherein the stud unit (110) further comprises:
connection bodies (114) formed between the stud body (113) and the pair of panel fixing bodies (111).

3. The vehicle clip according to claim 1, wherein each of the hooks (112) has a protruding shape.

4. The vehicle clip according to claim 1, wherein each of the hooks (112) has a square shape.

5. An object clamping apparatus for clamping objects using a vehicle clip, comprising:
vehicle panels (210);
a vehicle clip (220) comprising a stud unit (221) having a stud body (221c), a pair of panel fixing bodies (221d) disposed on both ends of the stud body (221c) and hooks (221b) formed on upper and lower surfaces of the panel fixing bodies (221); and a clip body unit (222) having an opening portion (222a); and
objects (230) fastened and clamped to the clip body unit (222) in upward and downward directions thereof,
wherein the clip body unit (222) has a "T" shape,
wherein the opening portion (222a) has a shape corresponding to a shape of the stud body (221c) and the hooks (222b) so that the stud unit (221) is bidirectionally fitted into the clip body unit (222).

6. The object clamping apparatus according to claim 6, wherein the stud unit (221) further comprises:
connection bodies (221a) formed between the stud body (221c) and the panel fixing bodies (221d).

7. The object clamping apparatus according to claim 6, wherein each of the hooks (221b) has a protruding shape.

8. The object clamping apparatus according to claim 6, wherein each of the hooks (221b) has a square shape.

9. The object clamping apparatus according to any one of claims 6 to 9, wherein the objects (230) are electronic parts comprising a curtain airbag, a handle bracket, and a wiring cable.

## Patentansprüche

1. Fahrzeugklemme (100), umfassend:
eine Dübeleinheit (110), umfassend: einen Dübelkörper (113), ein Paar Paneelbefestigungskörper (111), die an beiden Enden des Dübelkörper (113) angeordnet sind, und Haken (112), die an Ober- und Unterseiten der Paneelbefestigungskörper (111) ausgebildet sind; und
eine Klemmkörpereinheit (120), die einen Öffnungsabschnitt (121) aufweist, wobei die Klemmkörpereinheit (120) eine "T"-Form aufweist,
wobei der Öffnungsabschnitt (121) eine Form aufweist, die einer Form des Dübelkörper (113) und der Haken (112) entspricht, so dass die Dübeleinheit (110) von beiden Seiten her in die Klemmkörpereinheit (120) eingesetzt werden kann.

2. Fahrzeugklemme nach Anspruch 1, wobei die Dübeleinheit (110) des Weiteren Folgendes umfasst:
Verbindungskörper (114), die zwischen dem Dübelkörper (113) und dem Paar Paneelbefestigungskörper (111) ausgebildet sind.

3. Fahrzeugklemme nach Anspruch 1, wobei jeder der Haken (112) eine vorstehende Form aufweist.

4. Fahrzeugklemme nach Anspruch 1, wobei jeder der Haken (112) eine quadratische Form aufweist.

5. Objektklemmvorrichtung zum Festklemmen von Objekten unter Verwendung einer Fahrzeugklemme, umfassend:
Fahrzeugpaneele (210);
eine Fahrzeugklemme (220) die eine Dübeleinheit (221) umfasst, aufweisend: einen Dübelkörper (221c), ein Paar Paneelbefestigungskörper (221d), die an beiden Enden des Dübelkörper (221c) angeordnet sind, und Haken (221b), die auf Ober- und Unterseiten der Paneelbefestigungskörper (221d) ausgebildet sind;
und eine Klemmkörpereinheit (222), die einen Öffnungsabschnitt (222a) aufweist; und
Objekte (230), die an die Klemmkörpereinheit (222) in deren Aufwärts- und Abwärtsrichtung befestigt und festgeklemmt werden,
wobei die Klemmkörpereinheit (222) eine "T"-Form aufweist, wobei der Öffnungsabschnitt (222a) eine Form aufweist, die einer Form des Dübelkörper (221c) und der Haken (222b) entspricht, so dass die Dübeleinheit (221) von beiden Seiten her in die Klemmkörpereinheit (222) eingesetzt werden kann.

6. Objektklemmvorrichtung nach Anspruch 6, wobei die Dübeleinheit (221) des Weiteren Folgendes umfasst:
Verbindungskörper (221a), die zwischen dem Dübelkörper (221c) und den Paneelbefestigungskörpern (221d) ausgebildet sind.

7. Objektklemmvorrichtung nach Anspruch 6, wobei jeder der Haken (221b) eine vorstehende Form aufweist.

8. Objektklemmvorrichtung nach Anspruch 6, wobei jeder der Haken (221b) eine quadratische Form aufweist.

9. Objektklemmvorrichtung nach einem der Ansprüche 6 bis 9, wobei die Objekte (230) elektronische Teile, die einen Vorhang-Airbag umfassen, eine Handgriffhalterung und ein Verdrahtungskabel sind.

## Revendications

1. Pince pour véhicule (100) comprenant :
une unité de goujon (110) comprenant un corps de goujon (113), une paire de corps de fixation à des panneaux (111) disposés aux deux extrémités du corps de goujon (113), et des crochets (112) formés sur des surfaces supérieure et inférieure des corps de fixation à des panneaux (111) ; et
une unité de corps de pince (120) présentant une partie ouverture (121),
dans laquelle l'unité de corps de pince (120) présente une forme en « T »,
dans laquelle la partie ouverture (121) présente une forme correspondant à une forme du corps de goujon (113) et des crochets (112), de manière que l'unité de goujon (110) soit insérée de façon bidirectionnelle dans l'unité de corps de pince (120).

2. Pince pour véhicule selon la revendication 1, dans laquelle l'unité de goujon (110) comprend en outre :
des corps de liaison (114) formés entre le corps de goujon (113) et la paire de corps de fixation à des panneaux (111).

3. Pince pour véhicule selon la revendication 1, dans laquelle chacun des crochets (112) présente une forme saillante.

4. Pince pour véhicule selon la revendication 1, dans laquelle chacun des crochets (112) présente une forme carrée.

5. Appareil de serrage d'objets destiné à serrer des objets à l'aide d'une pince pour véhicule, comprenant :
des panneaux de véhicule (210) ;
une pince pour véhicule (220) comprenant une unité de goujon (221) comportant un corps de goujon (221c), une paire de corps de fixation à des panneaux (221d) disposés aux deux extrémités du corps de goujon (221c) et des crochets (221b) formés sur des surfaces supérieure et inférieure des corps de fixation à des panneaux **(221d)** ;
et une unité de corps de pince (222) présentant une partie ouverture (222a) ; et
des objets (230) fixés et serrés sur l'unité de corps de pince (222) dans les directions vers le haut et vers le bas de celle-ci,
dans lequel l'unité de corps de pince (222) présente une forme en « T »,
dans lequel la partie ouverture (222a) présente une forme correspondant à une forme du corps de goujon (221c) et des crochets (222b), de manière que l'unité de goujon (221) soit insérée de façon bidirectionnelle dans l'unité de corps de pince (222).

6. Appareil de serrage d'objets selon la revendication 6, dans lequel l'unité de goujon (221) comprend en outre :
des corps de liaison (221a) formés entre le corps de goujon (221c) et les corps de fixation à des panneaux (221d).

7. Appareil de serrage d'objets selon la revendication 6, dans lequel chacun des crochets (221b) présente une forme saillante.

8. Appareil de serrage d'objets selon la revendication 6, dans lequel chacun des crochets (221b) présente une forme carrée.

9. Appareil de serrage d'objets selon l'une quelconque des revendications 6 à 9, dans lequel les objets (230) sont des dispositifs électroniques comprenant un rideau gonflable, un support de poignée et un fil de câblage.
